# EUROPÄISCHE PATENTSCHRIFT

(11) **EP 2 670 997 B1**
(45) Veröffentlichungstag und Bekanntmachung des Hinweises auf die Patenterteilung: **02.11.2016**
(21) Anmeldenummer: 12702525.2
(22) Anmeldetag: 02.02.2012
(51) Int. Cl.: F16D 51/16, F16D 51/46, F16D 65/14

(54) **ELEKTROMOTORISCH BETREIBBARES TROMMELBREMSMODUL**
DRUM BRAKE MODULE WHICH CAN BE OPERATED BY ELECTRIC MOTOR
MODULE DE TAMBOUR DE FREIN FONCTIONNANT À L'AIDE D'UN MOTEUR ÉLECTRIQUE

(30) Priorität: 02.02.2011 DE 102011003544; 02.02.2011 DE 102011003545
(43) Veröffentlichungstag der Anmeldung: 11.12.2013
(73) Patentinhaber: Continental Teves AG & Co. OHG, 60488 Frankfurt (DE)
(72) Erfinder: BACH, Uwe, 65527 Niedernhausen (DE); VON HAYN, Holger, 61118 Bad Vilbel (DE); SUNDHEIM, Ralf, 60316 Frankfurt (DE); RITTER, Wolfgang, 61440 Oberursel (DE); SEFO, Ahmed, 65931 Frankfurt/M (DE); BALZ, Jürgen, 65510 Hünstetten-Oberlibbach (DE); HOFFMANN, Jens, 64285 Darmstadt (DE); SEMSCH, Martin, 35510 Maibach-Butzbach (DE); MEHNER, Götz, 61462 Königstein (DE)
(86) Internationale Anmeldenummer: PCT/EP2012/051805
(87) Internationale Veröffentlichungsnummer: WO 2012/104395

(56) Entgegenhaltungen:
- DE-A1- 19 714 046
- US-A1- 2001 037 919
- US-A1- 2009 260 929

## Beschreibung

Die vorliegende Erfindung betrifft ein elektromotorisch betreibbares Trommelbremsmodul für Kraftfahrzeuge mit den Merkmalen vom Oberbegriff vom unabhängigen Patentanspruch.

Eine Trommelbremse kann prinzipiell unterschiedlich nach verschiedenen Konstruktionsprinzipien (Simplex, Duplex, Duo-Duplex, Servo, Duo-Servo) ausgebildet sein. Ein einheitlicher, konstruktiver Vorteil der Trommelbremsen ist deren Selbstverstärkungseffekt in wenigstens eine Drehrichtung, so dass prinzipiell auf einen Bremskraftverstärker verzichtet werden könnte.

Um eine Feststellbremsfunktion elektromechanisch auszuführen, wird üblicherweise zusätzlich zu herkömmlichen, hydraulischen Radbrems-Betätigungsorganen einer Betriebsbremse ein zentraler elektromechanischer Aktuator vorgesehen, der über einen Elektromotor und ein Untersetzungsgetriebe sowie eine Gewindemutter-Spindel-Anordnung verfügt, die über einen vergleichsweise langen Betätigungszug wenigstens eine Bremsbacke einer Trommelbremse beaufschlagt. Dadurch wird eine elektromechanische Feststellbremse (EPB) erhalten, die universell für Klein- und Leichtfahrzeuge aber auch für schwere Fahrzeuge geeignet ist.

Zur Ausführung der Feststellbremsfunktion sind weiterhin elektromechanisch betätigbare Feststellbremsen mit einem axial verschiebbar (schwimmend) in einer Führung angeordneten Spreizschloss bekannt. Das Spreizschloss verfügt über zwei translatorisch verschiebbare Betätigungselemente, die die Bremsbacken gegensinnig beaufschlagen. In dem Aktuator ist jeweils ein Rädergetriebe mit Untersetzungsfunktion integriert vorgesehen, so dass das Spreizschloss direkt auf die Bremsbacken wirkt.

Die bekannten elektromechanisch betätigbaren Trommelbrems-Feststellsysteme sind in Hinblick auf deren Konstruktionsaufwand und Platzbedarf verbesserungswürdig. Die Parkbrems-Seilzugsysteme mit einem zentralen Aktuator sind nachteilig, weil bei einem Fahrzeughersteller eine gesonderte Installation und Anlenkung von dem Seilzug an der Radbremse erforderlich ist, so dass die Fertigmontage von Aktuator, Betätigungszug und Radbremse erst am Montageband bei dem Fahrzeughersteller erfolgen kann, was die Fertigungstiefe in diesem Bereich erhöht. Fahrzeughersteller wünschen für die Massenproduktion immer eine besonders kostengünstige, modulare, Fahrzeugherstellung mit geringer Fertigungstiefe. Daneben soll der Funktionsumfang einer Feststellbremse auf eine potentielle Betriebsbremsfunktion erweitert werden.

Aus der EP 0 920 390 B1 ist daher eine elektromechanisch betätigbares Trommelbremsmodul mit einer besonders geringen Gesamtbaugröße bekannt. Dabei ist ein Außenumfang einer zylindrischen Betätigungseinheit durch eine Öffnung einer Ankerplatte eingeführt. Eine drehbare Antriebsmutter ist über das Motorgehäuse auf einer Trägerplatte abgestützt. Zur Verkürzung von der Baulänge der Betätigungseinheit ist vorgesehen, dass ein Rotor von einem besonders gestalteten Elektromotor eine Spindelanordnung radial außen umgreift und verdrehsicher führt. Diese Bauart erfordert einen vergleichsweise leistungsstark dimensionierten Elektromotor mit speziellem Gehäuse sowie eine speziell angepasste Trägerplatte.

Eine elektromechanisch betätigbare Duo-Servo-Trommelbremse, ohne Seilzuganlenkung, ist aus der EP 594 233 B1 bekannt. Dabei ist ein Elektromotor auf einer Rückseite einer Ankerplatte angeordnet. Die Motorachse ist rechtwinklig zu einer Drehachse einer Bremstrommel arrangiert und treibt eine drehbar sowie axial unverschiebbar platzierte Gewindespindel an. Die Gewindespindel ist parallel zur Motorachse in der Bremstrommel vorgesehen, und in einem Gehäuse gelagert. Die Gewindespindel steht mit einem axial verschiebbar sowie unverdrehbar im Gehäuse gelagerten Element in Eingriff, das ein Hebelgetriebe beaufschlagt. Diese Bauart erfordert neben einem vergleichsweise leistungsstark dimensionierten Elektromotor noch weitere, sehr speziell ausgebildete, Bauteile und erlaubt daher keine einfache Variation in der Großserie. Heißabstellen ist nicht unproblematisch.
Die US 6,446,768 B2 beschreibt eine elektrische Betriebs- und Feststellbremse vom Trommelbremstyp mit wenig Komponenten umfassend zwei elektrische Antriebe in Ausrichtung parallel zu und auch außerhalb der Ankerplatte, sowie mit einer Spindelanordnung zur Rot-Trans-Wandlung, welche parallel zu und auch innerhalb der Ankerplatte gelagert ist.

Dokument US 2009/0260929 A1 offenbart ein elektromotorisch betreibbares Trommelbremsmodul nach dem Oberbegriff des Anspruchs 1.

Es wird daher ein Konstruktionsprinzip für ein kostengünstig herstellbares und einfach beim Fahrzeughersteller installierbares Trommelbremsmodul nachgefragt, das die Nachteile von dem Stand der Technik vermeidet, und prinzipiell zur Applikation als elektrische Betriebsbremse geeignet ist. Weiterhin wird eine fehlerfreie und standfeste Feststellbremsfunktion nachgefragt, die einfach für unterschiedliche Fahrzeugtypen und Fahrzeugausstattungen adaptierbar ist, und wobei der Antriebsstrang/Getriebestrang dennoch möglichst einfach gestaltet ist.

Die Aufgabe wird zusammen mit den kennzeichnenden Merkmalen vom Patentanspruch 1 gelöst. Dabei betrifft Anspruch 1 eine integrierte Lösung mit im Aktuator integriertem Rot-Trans-Wandler mit einer Antriebsmutter, welche außen, hinter der Ankerplatte, platziert ist. Der Kraftfluss der Zuspannkräfte ist unmittelbar direkt, indem eine Antriebsmutter von dem Wandler, zur Abstützung, axial fest sowie drehbar außen an der Ankerplatte abgestützt ist, und dass die Antriebsmutter eine verdrehgesichert sowie axial verschiebbar gelagerte Spindelanordnung antreibt, die mit einem Betätigungszug an wenigstens einer Bremsbacke angreift. Dadurch ist ein einfach montierbares, elektrisch antreibbares, Trommelbremsmodul ermöglicht, und wobei der Betätigungszug vorzugsweise als kurzer flexibler Seilzug ausgebildet ist, der zur einfachen Montage beim Fahrzeughersteller an einem Hebelgetriebe einer Bremsbacke fertig angelenkt ist, so dass ein Seileinhängevorgang beim Fahrzeughersteller entfällt. Ein besonderer Vorteil der vorliegenden Erfindung besteht darin, dass eine Sonderfertigung mit Sonderbauteilen entfällt, indem die Trommelbremsen mit Hebelgetriebe weiter verwendet werden können. Dies ermöglicht eine einfache Großserienvariation, indem Kraftfahrzeuge mit konventionellen manuellen Bremsbetätigungsorganen ohne großen Aufwand neben Kraftfahrzeugen mit elektromechanischen Betätigungsystemen (Seilzugsysteme mit Betätigungshebel) ermöglicht werden. Der verkürzte Betätigungszug erhöht die Effizienz, weil unnötige Reibung vermieden ist.

Indem der Seilzug oder ein Getriebeelement (Hebel) oder beides in Kombination mit besonders definierter Elastizität versehen ist, werden elektrische Stell- und Regelprozesse verbessert und eine Verspannung beim Heißabstellen wird vermieden. Heißabstellen wird also ermöglicht, und nachteilige Auswirkung von Schrumpfungsprozesse einer Bremstrommel werden ohne gesonderte Federelemente vermieden.

Eine besonders steife und effektive Bauweise mit geringen Reibungsverlusten wird ermöglicht, indem in einem Kraftfluss zwischen Ankerplatte und Antriebsmutter wenigstens ein Wälzlager platziert ist, das als Rillenkugellager oder Axiallager ausbildbar ist.

Mit Fertigungsvorteil ist ein Getriebegehäuse mehrteilig mit Gehäuseteilungsebene parallel sowie mittig zu einer Achse einer Spindelanordnung vorgesehen. Die Achse der Spindelanordnung ist antiparallel, schiefwinklig, zur Ankerplatte arrangiert. In einer abgewandelten Ausführung erstrecken sich Gehäuseteilungsebenen oder Deckel parallel zur Ankerplatte. Weiterhin ist ein Stutzen zur Aufnahme einer verschiebbaren Spindelanordnung vorgesehen, welche, in Relation zu einer Durchgangsöffnung der Ankerplatte, zentriert angeordnet ist, und die Durchgangsöffnung zumindest teilweise durchgreift. Indem der Rot-Trans-Wandler also gewissermaßen in der Durchgangsöffnung, in einer Schnittstelle zwischen Getriebegehäuse und Ankerplatte, integriert angeordnet ist, wird ein verdichtetes Trommelbremsmodul mit geringem Platzbedarf geschaffen. Die Spindelanordnung kann mit besonderem Vorteil für eine besonders effektive, reibungsfreie Gestaltung mit Wälzkörpern ausgestattet sein (Wälzkörperspindeltrieb, Kugelgewindetrieb (KGT)).

Es versteht sich, dass der Aktuator, inbesondere dessen einstückig oder mehrstückig gebautes Getriebegehäuse, insbesondere im Bereich seiner Teilungsebenen, abgedichtet ist. Damit im Bereich einer Austrittsöffnung vom Betätigungszug keine Fremdmedien (Flüssigkeit, Abrieb, Schmutz) in einen Innenraum von dem Aktuator gelangen können, und diesen langfristig schädigen, ist wenigstens eine Abdichtung im Bereich von dem Betätigungszug vorgesehen und beaufschlagt diesen. Die Abdichtung kann im wesentlichen ortsfest zur Ankerplatte mit einer Dichtlippe versehen sein, unter der sich der Betätigungszug in Ausübung von eine Betätigungsbewegung relativ verschiebt. Alternativ sitzt eine Dichtlippe auf dem Betätigungszug auf, verschiebt sich gemeinsam mit diesem, und die Abdichtung verfügt über wenigstens einen elastischen Abschnitt (Faltenbalg, Rollbalg), welcher die Betätigungsbewegung ausgleicht. In jedem Fall versperrt die Abdichtung einen Spalt zwischen Getriebegehäuse und Betätigungszug.

Definierte Elastizität und/oder Elastizitätsänderung im Betätigungsprozess erleichtert elektrische Verstell- und Regelvorgänge. Die Elastizität vom Hebel kann zu diesem Zweck durch einen oder mehrere Anschläge abgeändert werden. Ein Anschlag kann als gesonderter Schenkel von dem Hebel ausgebildet sein. Weiterhin kann dem Hebel eine gesonderte Elastizität (Elastomerelement, Feder) zugeordnet sein.

Eine weiterhin einfache, großserientechnische Adaption für unterschiedliche Applikationen unter Beibehaltung einer Gleichteilstrategie betreffend Ankerplatte und Aktuator wird ermöglicht, indem zwischen Aktuator und Ankerplatte ein Adapter vorgesehen wird. Der Adapter kann als einstückiger Bestandteil vom Getriebegehäuse oder als gesondertes Bauteil vorgesehen sein.

In jedem Fall ist der Betätigungszug zwischen Aktuator und Hebelgetriebe einer Bremsbacke so vormontiert vorgesehen, dass der Arbeitsschritt einer Ankupplung zwischen Betätigungszugs und Radbremse rationalisiert ist, und wobei weiterhin kein Seilzug-Zentralaktuator im Kraftfahrzeug montiert zu werden braucht. Mit anderen Worten genügen prinzipiell rein elektrische Verbindungen zwischen Aktuator und elektronischer Steuereinheit.

In der Zeichnung zeigt, teilweise schematisch und teilweise in verschiedenem Maßstab, Schnitt, Ansicht oder Perspektive:
Fig. 1a Ankerplatte mit Aktuator in perspektivischer Rückansicht, und Fig. 1b Detailansicht vom Aktuator nach Fig. 1a,
Fig. 2a Schnitt entlang der Schnittlinie II-II in Fig. 1 mit verdeutlichtem Kraftfluss der Betätigungskraft, und Fig. 2b Details vom Aktuator nach Fig. 2a im Schnitt,
Fig. 3a, 3b Abdichtungsmaßnahmen für den Aktuator im Schnitt,
Fig 4a-c Einzelheiten zu Befestigungsalternativen zwischen Aktuator und Ankerplatte, jeweils im Schnitt,
Fig. 5a,b ein vorgespanntes Hebelgetriebe mit definierter Elastizität, und Fig. 5c ein Hebel mit integriertem Anschlag,
Fig. 6 ein Rot-Trans-Wandler in aufgelöster Bauweise, teilweise innerhalb einer Bremstrommel, zwecks Erläuterung.

Übereinstimmende Merkmale sind in der Zeichnung jeweils mit übereinstimmenden Bezugsziffern gekennzeichnet.

Ein elektromotorisch betätigbares Trommelbremsmodul 1 zur Anordnung an Achsbauteilen eines Kraftfahrzeugs umfasst eine Ankerplatte 2 mit daran gelagerten Bremsbacken 6a,b, die innerhalb einer nicht gezeichneten Bremstrommel vorgesehen sind. Auf einer gegenüber liegenden Seite der Ankerplatte 2 ist ein elektromotorisch angetriebener Aktuator 3 befestigt, der über ein Getriebe 4 und einen nachgeschalteten Betätigungszug 5 derart an einer oder mehreren der Bremsbacken 6a,b angreift, dass diese Bremsbacke(n) 6a,b eine Betätigungsbewegung B in Richtung auf die Bremstrommel ausführen können, um eine Betriebs- und/oder Feststellbremsfunktion auszuführen. Zwischen den Bremsbacken 6a,b kann eine Abstützvorrichtung 11 vorgesehen sein.
Das Getriebe 4 umfasst ein Getriebegehäuse 8, das den Motor 7 aufnimmt oder den Motor 7 zumindest trägt. Der Motor 7 konsumiert Gleichspannung ist mechanisch oder elektronisch kommutiert, und von einem preiswert verfügbaren Standardtyp.

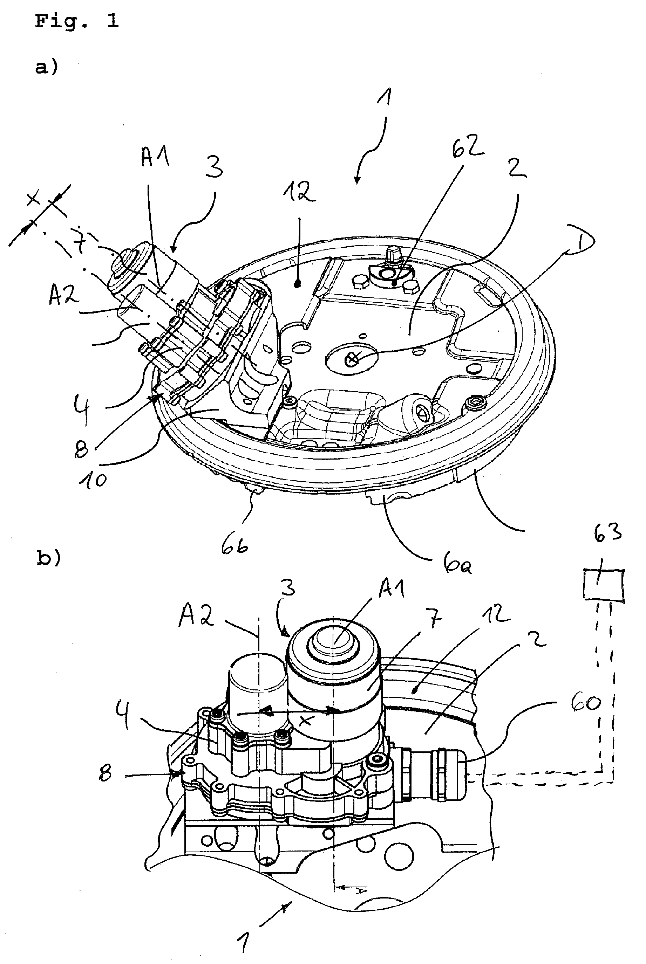

Die Fig. 1a,b zeigt, dass eine Achse A1 von dem Motor 7 im Abstand x sowie parallel zu einer Achse A2 einer Spindelanordnung 9 arrangiert ist. Allen Ausführungsformen oder Lösungen ist gemeinsam, dass zwischen Aktuator 3 und Ankerplatte 2 ein Adapter 10 vorgesehen sein kann, um eine einfache Anpassung und Adaption an unterschiedliche Raum- und Einbauverhältnisse in einem Kraftfahrzeug zu ermöglichen. Der Adapter 10 ist einstückiger Bestandteil vom Getriebegehäuse 8, oder ein gesondertes Bauteil. Eine weitere Besonderheit sämtlicher Lösungen besteht darin, dass der Aktuator 3 entgegen der Vorwärts-Fahrtrichtung eines Fahrzeugs, also bezogen auf die Vorwärts-Fahrtrichtung hinter einer Radnabe, etwa in 3-Uhr Stellung bezogen auf die Radnabe, sowie dicht an der Ankerplatte 2 angeordnet ist. Dadurch ergibt sich ein besonders guter Schutz des Aktuators 3 gegen Umwelteinflüsse, wie Bewitterung und Steinschlag. Die geringe Baulänge vom Aktuator mit geringem Überstand Ü (durch die Parallelität der Achsen A1, A2), und die Flexibilität vom Betätigungszug 5 ermöglichen grundsätzlich eine frei adaptierbare Platzierung an der Ankerplatte 2.

Der Antriebs- und Getriebestrang der Lösungen nach Fig. 1-4 verfügt in diesem Zusammenhang über ein mehrstufiges, insbesondere 2-stufiges Zahnrad- und/oder Riemen- und/oder Schneckengetriebe und/oder Planetengetriebe (Mischkombinationen vorgenannter Typen sind möglich und erwünscht) als Momentenwandler vom Untersetzungstyp. Dabei ermöglicht ein vorzugsweise zweistufiges Rädergetriebe ein Untersetzungsverhältnis in einem Bereich zwischen etwa 7:1 bis 25:1. Wenn das nachgeschaltete Hebelgetriebe im Bereich der Bremsbacken 6a,b eine Untersetzung von etwa 5:1 ermöglicht, wird ein Untersetzungsverhältnis von etwa 125:1 erzielt. Hinzu tritt eine zusätzliche Untersetzungswirkung von dem Rot-Trans-Wandlers, was eine Gesamtuntersetzungswirkung über den gesamten Antriebsstrang in einer Größenordnung von mindestens etwa 250:1 ermöglicht. Durch diesen Getriebestrang sind die Kosten- und Leistungsanforderungen an den Motor 7 zusätzlich deutlich abgesenkt.

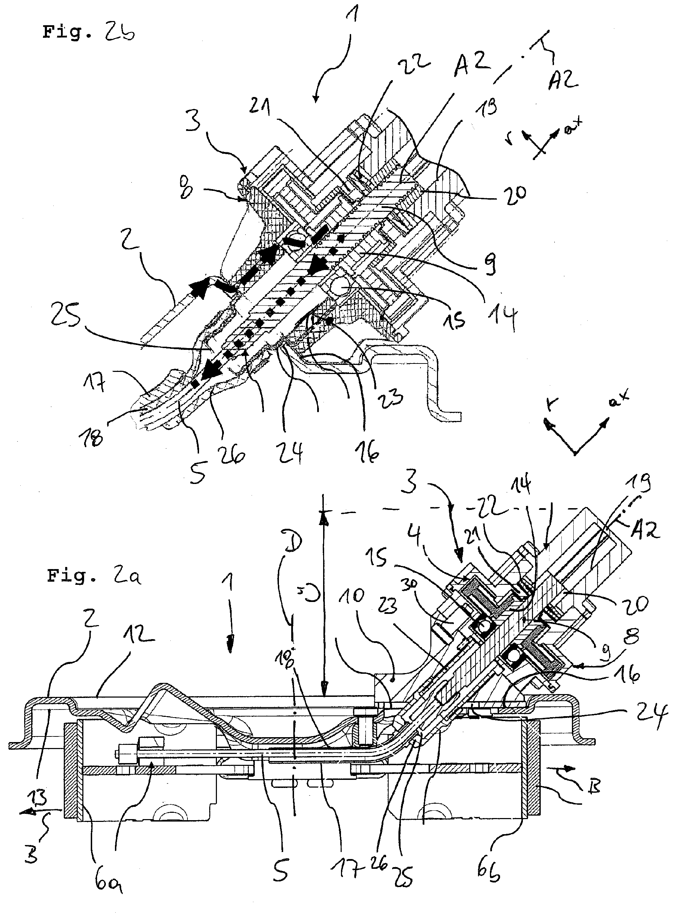

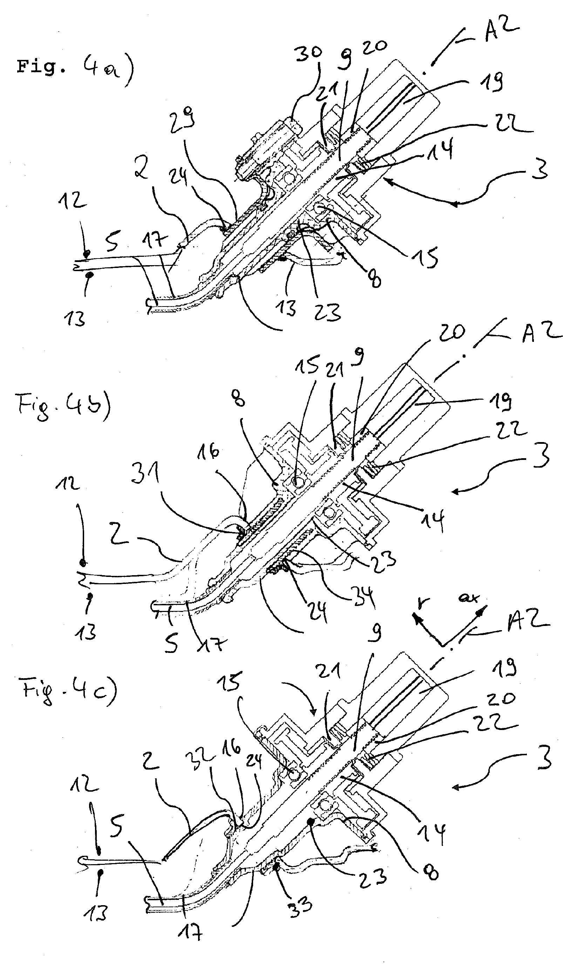

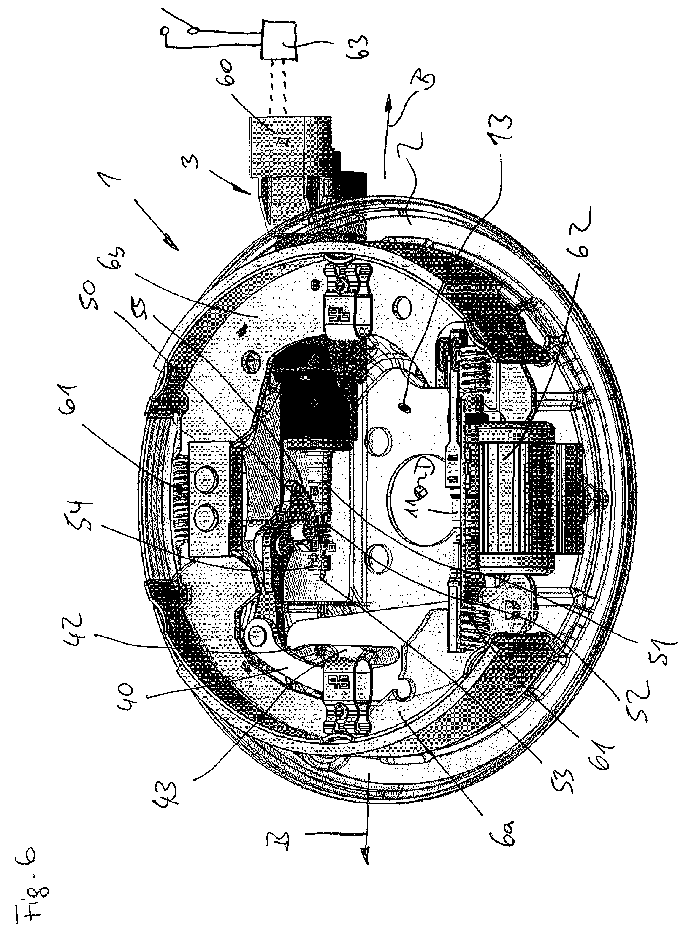

Die Aktuatorkonstruktion ist im Einzelnen aus Fig. 1-4 ersichtlich. Der Aktuator 3 ist dabei als gesondert handhabbare Baueinheit auf einer Seite 12 der Ankerplatte 2 vorgesehen. Es ist möglich, den Rot-Trans-Wandler als Spindelanordnung 9 in das Getriebegehäuse 8 zu integrieren und gemäß Fig. 2-4 in dem Getriebegehäuse verdrehsicher, leichtgängig sowie spielfrei zu führen. Eine Abwandlung der Gestaltung besteht darin, dass der Rot-Trans-Wandler außerhalb vom Getriebegehäuse 8 innerhalb der Bremstrommel vorgesehen ist, und eine Spindelanordnung 9 oder einen schwenkbaren Hebel 50 gemäß Fig. 6 beinhaltet, der an der Ankerplatte 2 gelagert ist. Die Befestigung ist vorzugsweise lösbar angeflanscht vorgesehen. Einzelheiten der Fixierung folgen anhand nachstehender Beschreibung von den Fig. 4 a-c.

Wie aus Fig. 1a,b hervorgeht, ist das Getriebegehäuse 8 mehrstückig gebaut. Das Getriebegehäuse 8 nimmt eine Mehrzahl von Getriebebauelementen auf, die primär zur Drehmomentwandlung (geringes Eingangsdrehmoment, hohes Ausgangsdrehmoment) dienen, und auch eine stromlose Feststellbremsfunktion mittels Selbsthemmung ermöglichen können. Achsen A1, A2 von Motor- und Getriebewellen sind parallel, in dem Abstand X versetzt, zueinander vorgesehen. Zumindest bestimmte Getriebebauelemente können zumindest teilweise kostengünstigen Kunststoffwerkstoff aufweisen. Bevorzugt ist stromlose Selbsthemmung in dem Rot-Trans-Wandler (Spindelanordnung 9) vorgesehen, so dass der Rest vom Getriebestrang prinzipiell von den Zuspannkräften weitestgehend entlastet ist.

Gemäß Fig. 1-5 nimmt das Getriebegehäuse 8 zumindest teilweise zusätzlich eine Rot-Trans-Wandlerbaugruppe mit der Spindelanordnung 9 zur Wandlung der rotatorischen Antriebsdrehbewegung in eine translatorische Abtriebsbewegung auf. Folglich ist der Wandler zur raumsparenden Integration in die bekannten Trommelbremsanordnungen kostengünstig und platzsparend (verdichtet) in einer Schnittstelle zwischen Aktuator 3 und Ankerplatte 2 eingefügt und dennoch im Getriebegehäuse geführt, so dass für eine Umrüstung auf die elektromechanische Aktuatorik irgendwelche Änderungen an der Trommelbremsmechanik, insbesondere an dem Hebelgetriebe oder an der Ankerplatte 2, gar nicht notwendig sind.

Für diejenigen Applikationen mit einer besonders effektiven, reibungsreduzierten, elektromechanischen Bremsfunktion befinden sich zwischen einer prinzipiell metallisch ausgebildeten Antriebsmutter 14 und einer prinzipiell metallisch ausgebildeten Spindelanordnung 9 mehrere Wälzkörper. Eine Parkbremsfunktion wird bei den "stromlos gelösten" Varianten durch eine gesonderte Feststell-,Verriegelungs- oder Blockiervorrichtung ermöglicht. Eine besonders vorteilhafte Vorrichtung ist beispielsweise aus der DE 19826785 A1 bekannt, deren Offenbarungsgehalt in Hinblick auf die Prinzipien dieser Festellvorrichtung in vollem Umfang hier mit einbezogen wird.

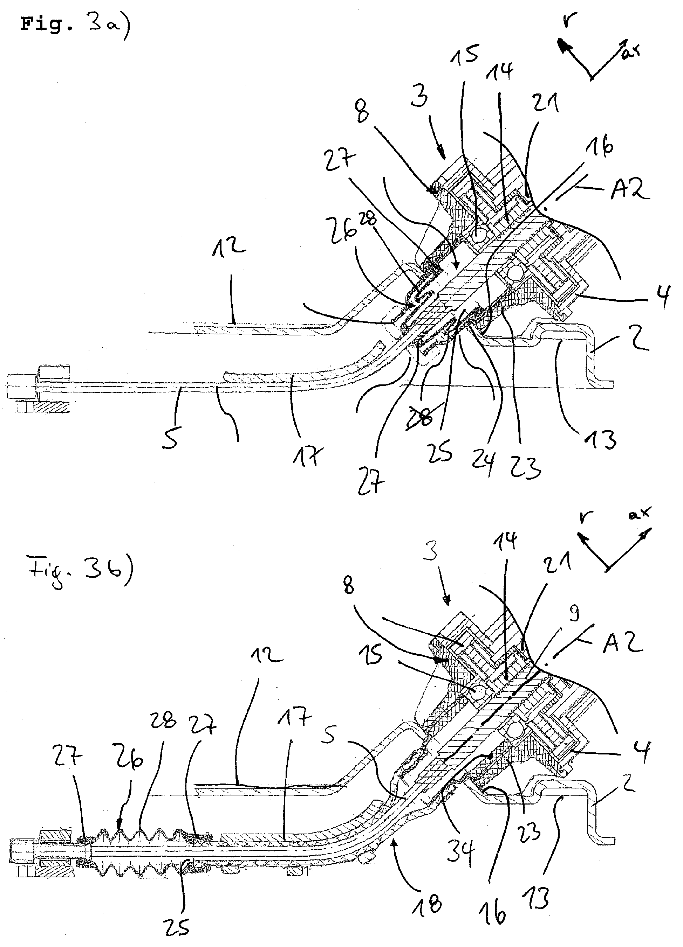

Der Kraftfluss der Bremsbetätigungskraft ist - wie in Fig. 2b verdeutlicht - folgendermaßen. Ausgehend von Bremsbacke 6a,b und Betätigungszug 5 gelangt die Zugkraft über Spindelanordnung 9 in die Antriebsmutter 14 Für eine direkte, starre Bremskraftabstützung an einer planen Auflagefläche 16 dient die metallische Distanzbuchse 34. Diese stützt einen Außenring von dem Lager 15 ab. Die Distanzbuchse 34 ist bevorzugt als Einlegeteil in das Getriebegehäuse 8 aus Kunststoffwerkstoff eingeformt. Das Lager 15 ist mit Vorteil als reibungsarmes Wälzlager (Schräg-, Schulter-, Axial- oder Rillenkugellager) ausgelegt. Das beschriebene Lager 15 ermöglicht auch eine radial gerichtete Lagerung für die Antriebsmutter 14. In Abwandlung der Gestaltung, kann für eines besonders präzise, kippresistente Abstützung der Antriebsmutter 14 jeweils ein antriebsseitiges und zusätzlich ein abtriebsseitiges Lager vorgesehen sein, ohne die Erfindung zu verlassen.
Eine Führung 17 und Umlenkung von dem Betätigungszug 5 ist weitgehend reibungsfrei ausgebildet, indem eine Schmierstoffbeschichtung und/oder sorgfältig abgerundete Verlegung vom Betätigungszug 5 mit oder ohne Hülle 18 vorgesehen ist. Dabei ist eine Abdichtungsmaßnahme auf die konkrete Konstruktion von dem Betätigungszug 5, mit oder ohne Hülle 18, abzustimmen, wie exemplarisch aus den Fig. 3a,b ersichtlich ist.

Die Spindelanordnung 9 steht mit der Antriebsmutter 14 in Eingriff, und ist in dem Getriebegehäuse 8 verdrehsicher sowie axial verschiebbar geführt platziert. Zu diesem Zweck weist das Getriebegehäuse 8 eine prismatische oder zylindrische Führung 19 mit wenigstens einem oder mehreren angepassten Kulissenelementen auf, welche als formschlüssig wirksames Mittel zur Führungs- und Verdrehsicherungsfunktion beitragen. Um eine günstige elektrische Abschaltung vom Aktuator 3 zu ermöglichen, ist die Spindelanordnung 9 mit einem Anschlag 20 versehen, der zur Anlage an einem gehäuseseitigen Widerlager 21 dient. Weiterhin ist zwischen Widerlager 21 und Anschlag 20 wenigstens ein Elastoelement 22 vorgesehen. Das Elastoelement 22 ist bevorzugt als Tellerfederanordnung ausgebildet, die eine steife Federkennlinie bei geringem Platzbedarf ermöglicht. Dies ermöglicht in Verbindung mit Messung und Beobachtung vom Strombedarf des Motors 7 eine günstige und frühzeitige automatische elektrische Abschaltung durch die Steuereinheit 63.
Die erfindungsgemäße, und besonders verdichtete Aktuatorbauweise beinhaltet, dass die Spindelanordnung 9 zumindest teilweise in einem Stutzen 23 vom Getriebegehäuse 8 verschiebbar geführt aufgenommen. Der Stutzen 23 ist in Relation zu einer Durchgangsöffnung 24 der Ankerplatte 2 zentriert angeordnet. Vorzugsweise durchgreift der Stutzen 23 die Durchgangsöffnung 24 derart, dass zumindest ein Teil von der Spindelanordnung 9 in das Innere von der Bremstrommel verschoben werden kann. Dies dient auch einer automatischen Zentrierung vom Betätigungszug 5.

Der Aktuator 3 ist vollständig gegen das Eindringen von Fremdmedien (Schmutz, Abrieb, Flüssigkeit) oder das Austreten von eingefülltem Schmiermittel geschützt. Zur Abdichtung von dem Getriebegehäuse 8 ist dazu im Bereich von einer Austrittsöffnung 25 des Betätigungszugs 5 wenigstens ein Dichtungselement 26 vorgesehen. Das Dichtungselement 26 umfasst wenigstens einen ortsfest vorgesehenen Grundkörper 27 und wenigstens eine, im Wesentlichen ortsfest vorgesehene, Dichtlippe, die einen Spalt zwischen Getriebegehäuse 8 und Betätigungszug 5 versperrt. Bei statischer Anordnung vom Dichtungselement 26 bewegt sich der Betätigungszug 5 - in Ausübung des Betätigungshubs - relativ zu der Dichtlippe (vgl. Fig. 2a). Bei einer anderen Ausführungsform einer Abdichtung nach Fig. 3a ist zur elastisch ausgleichenden Kompensation von dem Betätigungshub wenigstens ein elastischer, gemeinsam mit dem Betätigungszug 5 bewegbarer, Abschnitt, Roll- oder Faltenbalg vorgesehen. Eine andere Abwandlungen einer Abdichtung (Fig. 3b) besteht darin, dass der gesamte Betätigungszug 5 mit einer Hülle 18 versehen ist. Die Hülle 18 ist grundsätzlich hermetisch dicht an dem Stutzen 23 angeordnet, und endet mit hermetisch dichter Anordnung im Bereich von einer Endarmatur. Die Abdichtung ist genauso wie die Führung 17 von dem Betätigungszug 5 weitestgehend reibungsfrei (mit Schmier- oder Gleitmittel beschichtet) gestaltet.

Günstige Befestigungsschnittstellen zwischen Ankerplatte 2 und Aktuator 3 sind den Figuren 4a-4b exemplarisch entnehmbar. Gemäß Fig. 4a ist zur Adaption an den Aktuator 3 in eine Durchgangsöffnung 24 einer Ankerplatte 2 vom konventionell-hydraulisch betätigten Typ zusätzlich ein zylindrisches Flanschbauteil 29 zur Aufnahme von dem Aktuator 3 angeordnet. Der Stutzen 23 ist radial außen mit einem Dichtungselement versehen und in das Flanschbauteil 29 abgedichtet eingefügt. Zur lösbaren Befestigung zwischen Aktuator 3 und Flanschbauteil 29 dienen mehrere schraubbare Befestigungsmittel 30, die neben dem Aktuator 3, also außerhalb der Bremstrommel, wartungsfreundlich zugänglich sind. Die Variante hat den Vorteil, dass die Ankerplatte 2 zur Aufnahme von dem Aktuator 3 durch das zusätzliche Flanschbauteil 29 einfach adaptiert ist , also die grundsätzlich spanlose Herstellung und Formgebung der Ankerplatte 2 mit vorbekannten Werkzeugen erhalten bleibt.

Bei der kostengünstigen, exemplarischen Variante nach Fig. 4b ist zur lösbaren Befestigung zwischen dem Stutzen 23 vom Getriebegehäuse 8 und der Ankerplatte 2 ein formschlüssig oder elastisch-klemmend wirksames Befestigungsmittel 31 vorgesehen, das vorzugsweise als Sprengring ausgelegt ist, welcher in dem Innenbereich der Bremstrommel an einer Nut, oder ähnlichem, von dem Stutzen 23 angreift. Für eine Demontage von dem Aktuator 3 ist es erforderlich, zuvor die Bremstrommel von der Nabe abzunehmen. Eine elastische Vorspannung und Abdichtung ist sinnvoll.

Bei einer Ausführungsform nach Fig. 4 c, die ein Außengewinde 32 an dem Stutzen 23 vorgesehen, und wobei eine zentrale Gewindemutter 33 auf den Stutzen 23 aufgeschraubt ist. Es versteht sich, dass eine Abdichtungsmaßnahme für alle Varianten sinnvoll ist.

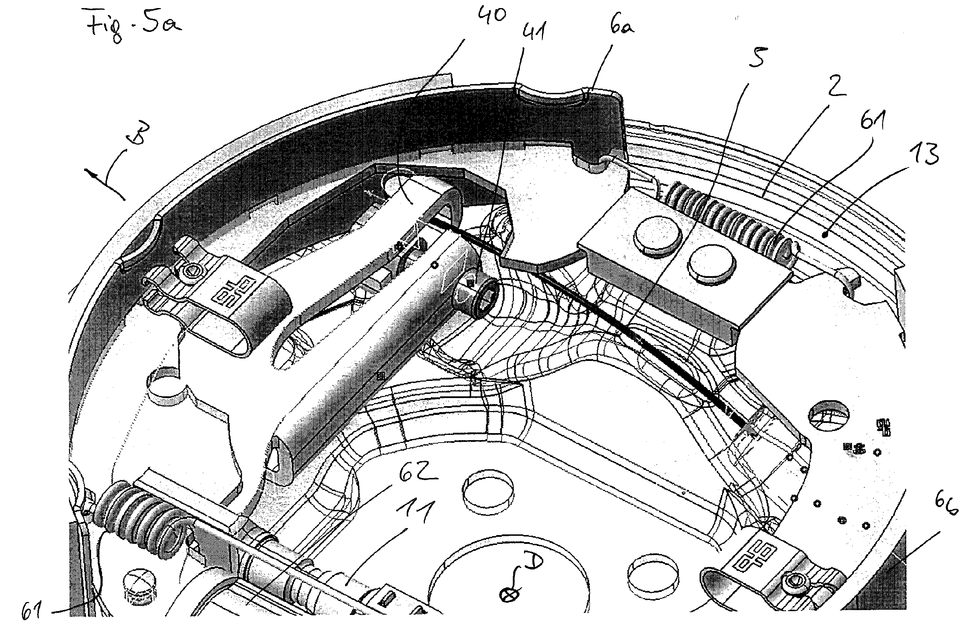

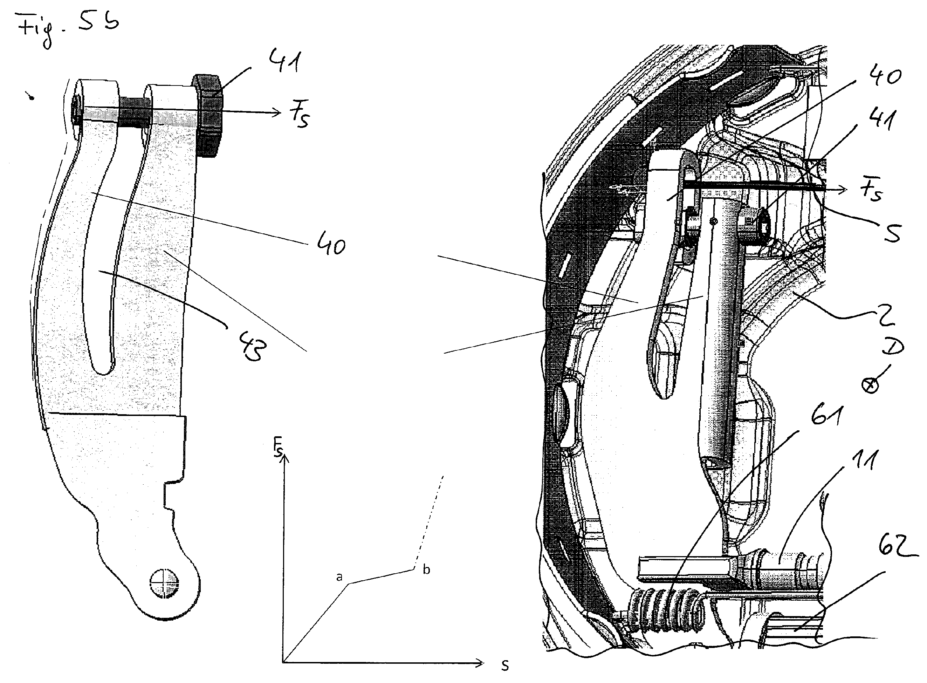

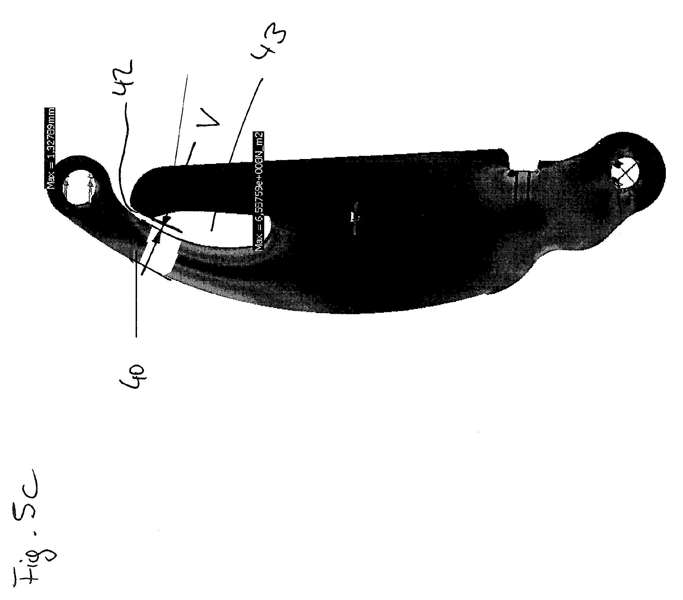

Das oben beschriebene Trommelbremsmodul 1 mit Betätigungszug 5 ist mit einem definiert elastisch ausgebildeten Hebelgetriebe wie folgt kombinierbar, welches innerhalb der Bremstrommel integriert vorgesehen ist. Das Hebelgetriebe verfügt dabei über wenigstens einen definiert elastisch-federnd ausgebildeten Hebelarm 40 der einerseits an dem der Betätigungszug 5 angelenkt ist und andererseits an einer Bremsbacke 6a,b angelenkt ist, und wobei der Hebelarm 40 eine vorgegebene Federkennlinie aufweist. Wenn die Trommelbremse in heißem Zustand eine Feststellbremsfunktion ausführt, und die Bremstrommel danach abkühlt, was einen Schrumpfungsprozess der Bremstrommel auslöst, wird durch die definiertelastische Nachgiebigkeit der Hebelkennline nach Fig. 5b ein Klemmvorgang oder eine Zerstörung der Trommelbremse vermieden. Der elastische Hebelarm 40 kann insbesondere elastischvorgespannt vorgesehen sein. Dazu kann ein Vorspannelement 41 vorgesehen sein, das beispielsweise als Schraube gestaltet ist, so dass die Vorspannwirkung einstellbar ist. Dem Hebelarm 40 kann ein Anschlag 42 zugeordnet sein, der die Deformation von dem elastischen Hebelarm 40 begrenzt. In der bevorzugten Ausführungsform nach Fig. 5b weist ein Hebel 40 zwei gabelförmige, gesonderte Schenkel auf, von denen ein Schenkel die elastische Funktion aufweist, und der andere Schenkel eine Anschlagfunktion für den anderen Schenkel übernehmen kann. Im Bereich vom Anschlag 42 sind die beiden Schenkel in definiertem Abstand V zueinander angeordnet. Durch die Vorspannung und den Anschlag 42 vom Hebelarm 40 wird es mit einfachen konstruktiven Mitteln ermöglicht, eine verbesserte Zuspannkrafterkennung auf Grundlage einer Überwachung von dem Strombedarf des Motors 7 durchzuführen. Gesonderte Kraftsensorik kann entfallen. Denn die Vorspannung und der Anschlag 42 verursachen gemäß Fig. 5b (mittleres Schaubild) deutliche und daher vergleichsweise einfach sensierbare Veränderungen (Knicke) in einem Zuspannkraft-Betätigungsweg-Diagramm, das im Verlauf im Wesentlichen mit einem Strombedarf-Betätigungsweg-Diagramm übereinstimmt. Das Vorspannelement 41 ist zwischen den beiden Schenkeln vorgespannt vorgesehen sein. Vorzugsweise ist der Hebelarm 40 aus ebenem Flachwerkstoff, insbesondere aus Stahlblech ausgebildet und verfügt über eine im Wesentlichen sichelförmige Außenkontur, und wobei zur Ausbildung der beiden Schenkel eine im Wesentlichen sichelförmige Ausnehmung 43 vorgesehen ist.

Eine Verschleißnachstellung kann prinzipiell elektronisch anhand einer Anpassung einer Rückstellposition vom Aktuator 3 erfolgen, wobei ein Leerweg mit fortschreitendem Reibbelagverschleiß gewissermaßen sukzessive nachgeführt wird.

Falls das Trommelbremsmodul 1 gemeinsam mit einer hydraulischen Betätigung in einer Kraftfahrzeugbremsanlage integriert vorgesehen ist, wobei der elektromechanische Aktuator ausschließlich eine elektromechanische Feststellbremsfunktion ausführen soll, und wobei eine Betriebsbremsfunktion prinzipiell hydraulisch ausgeführt wird, ist jeweils zusätzlich wenigstens ein Radbremszylinder 62 mit Kolben, sowie eine automatische Nachstellvorrichtung vorgesehen, die vorzugsweise mit der Abstützvorrichtung 11 kombiniert sein kann. Der Radbremszylinder 62 befindet sich dabei im Bereich der Abstützvorrichtung 11, in Bezug auf eine Drehachse D der Bremstrommel gewissermaßen gegenüber dem elektromotorischen Aktuator 3. Die elektromechanische und die hydraulisch/mechanische Betätigungsrichtung sind dabei parallel zueinander gerichtet angeordnet.

Die nachstehende Beschreibung bezieht sich auf Fig. 6. Soweit gesondert zu dem Aktuator 3 ein Rot-Trans-Wandler vorgesehen ist, der mit einer Spindelanordnung 52 innerhalb der Bremstrommel platziert ist, stellt dies keinerlei Merkmal der vorliegenden Erfindung dar. In diesem Zusammenhang werden ausschließlich die Unterschiede gegenüber den Figuren 1-5 beschrieben. Übereinstimmende Merkmale sind in Fig. 6 mit übereinstimmenden Bezugsziffern gekennzeichnet.

Der Rot-Trans-Wandler von dem Aktuator 3 ist ohne Antriebsmutter ausgebildet. Denn in dem Betätigungszug 5 zwischen Aktuator 3 und Bremsbacken 6 ist ein Rot-Trans-Wandler mit wenigstens einem, schwenkbar an der Ankerplatte angelenkten, Hebel 50 vorgesehen, welcher vollständig innerhalb der Bremstrommel integriert ist. Dies reduziert die Baulänge von dem Aktuator 3 zusätzlich, und ermöglicht eine aufgelöste Bauweise, indem die Getriebebauelemente zur Drehmomentwandlung von denjenigen Getriebebauelementen zur Umwandlung in die Translationsbewegung abgetrennt sind.

In weiterer Ausgestaltung ist eine Abtriebswelle 51 von dem Aktuator 3 mit einer gewindeförmigen Spindelanordnung 52 versehen. Spindelanordnung 52 weist ein Ende 53 auf, das in einem Lager 54 - vorzugsweise Wälzlager - drehbar angeordnet ist. Das Lager 54 ist an oder in der Ankerplatte 2 befestigt oder in der Ankerplatte 2 integriert vorgesehen. Zur Ausbildung von einem Schwenkhebelgetriebe ist die Spindelanordnung 52 so in der Bremstrommel platziert, dass diese mit einer Verzahnung 55 von dem Hebel 50 kämmt. Die Steigung der Verzahnung 55 ist mit Vorteil so ausgebildet, dass eine stromlose Selbsthemmung für die Feststellbremsfunktion vorliegt. Eine definiert elastische Ausbildung von dem angelenkten Hebel 40 verbessert elektronische Schalt- und Regelvorgänge, weil dadurch eine deformationsabhängige Kennlinienveränderung in einem Stromverlauf ermöglicht ist. Dem Hebel 40 kann ein oder mehr Anschläge 42 zur Änderung vom elastischen Deformationsverhalten zugeordnet sein, die eine Kennlinienveränderung bewirken, und dadurch eine vereinfachte Steuerung und Regelung - ohne direkt messende Kraftsensorik - ermöglichen. Ein Anschlag 42 kann als gesonderter Schenkel von dem Hebel 40 ausgebildet sein. Zur zusätzlichen Beeinflussung kann dem Hebel 40 ein gesondertes Elastoelement zugeordnet sein. Es versteht sich, dass alle Lösungen und Ausführungsformen eine Serienschaltung von mehreren Elastoelementen aufweisen können.

Zur elektrischen Verbindung mit einer elektronischen Steuereinheit 63 und/oder elektrischem Schalter ist der Aktuator mit wenigstens einer elektrischen Buchse- oder elektrischen Stecker-Schnittstelle 60 versehen. Zur Stromführung in einem Getriebegehäuse 8 aus Kunststoffwerkstoff können metallische Stromschienen (Stanzgitter) dienen. Es ist möglich, die elektrische Schnittstelle 60 durch ein austauschbares, steckbares Adapterteil, das eingefügt wird, einfach an unterschiedliche Anforderungen wie Positionen, genaue Steckerausbildungen oder andere Kundenwünsche anzupassen.

Für eine Bremsbetätigung wird der Aktuator 3 in Brembetätigungsrichtung angetrieben. Dadurch verschiebt sich die Spindelanordnung 9, in Fig. 1-4 - oder der Hebel 50 nach Fig. 6 - entgegen der elastischen Vorspannkraft von einem oder mehreren Federelementen 61 in die Axialrichtung derart, dass in dem Betätigungszug 5 die nachgefragte Zugkraft Fs aufgebaut wird. Die Bremsbacken 6a,6b werden so lange gegen die Bremstrommel angelegt, und die Zuspannkraft wird so lange erhöht, bis eine elektronische Steuereinheit 63 ein Abschaltsignal emittiert, und die Bestromung unterbricht.

Zwecks Absicherung einer Bremsbetätigung (Feststellbremsvorgang) kann der Motor 7 kurzgeschlossen werden. Wenn das Getriebe selbsthemmend ausgelegt ist, ist dadurch eine stromlose Selbsthemmung gegeben. Für andere Anwendungsfälle kann eine gesonderte Feststellbrems-Verriegelungsvorrichtung vorgesehen sein.

Zum Lösen einer Feststellbremsbetätigung wird der Aktuator 3 reversiert in Löserichtung angetrieben. Jeder Lösevorgang wird durch elastische Rückverformung - zumindest von dem vorgespannten Federelement 61 - unterstützt und daher besonders schnell absolviert. Eine elastische Rückverformung von dem Hebelarm 40 oder weiterer Elastoelemente unterstützt den Löseprozess grundsätzlich in gleicher Weise.

Insgesamt wird einem Fahrzeughersteller durch die Erfindung eine besonders kostengünstige, einfache Installation eines elektromechanisch betätigbaren Trommelbremsmoduls 1 nach einem sogenannten plug-and-play-Prinzip ermöglicht, indem das Trommelbremsmodul 1 einfach mechanisch an einem Achsbauteil befestigt wird, und wobei lediglich eine elektrische Schnittstelle 60 zur elektrischen Versorgung vom Aktuator 3 mit einer Steuereinheit 63 und/oder einem Schalter hergestellt wird. Im Ergebnis ist die notwendige Fertigungstiefe bei dem Fahrzeughersteller dadurch deutlich reduziert.

### Bezugszeichenliste:

- 1: Trommelbremsmodul
- 2: Ankerplatte
- 3: Aktuator
- 4: Getriebe
- 5: Betätigungszug
- 6: Bremsbacken
- 7: Motor
- 8: Getriebegehäuse
- 9: Spindelanorndung
- 10: Adapter
- 11: Abstützvorrichtung
- 12: Außenseite
- 13: Innenseite
- 14: Antriebsmutter
- 15: Lager
- 16: Auflagefläche
- 17: Führung
- 18: Hülle
- 19: Führung
- 20: Anschlag
- 21: Widerlager
- 22: Elastoelement
- 23: Stutzen
- 24: Durchgangsöffnung
- 25: Austrittsöffnung
- 26: Dichtungselement
- 27: Grundkörper
- 28: Faltenbalg
- 29: Flanschbauteil
- 30: Befestigungsmittel
- 31: Befestigungsmittel
- 32: Außengewinde
- 33: Gewindemutter
- 34: Distanzbuchse
- 40: Hebelarm
- 41: Vorspannelement
- 42: Anschlag
- 43: Ausnehmung
- 50: Hebel
- 51: Abtriebswelle
- 52: Spindel
- 53: Ende
- 54: Lager
- 55: Verzahnung
- 60: Schnittstelle
- 61: Federelement
- 62: Radbremszylinder
- 63: Steuereinheit
- A1,A2: Achse
- D: Drehachse
- Fs: Spannkraft
- S: Weg
- a,b: Knickpunkt
- ax: axial
- r: radial
- Ü: Überstand
- V: Abstand
- X: Abstand

## Patentansprüche

1. Elektromotorisch betreibbares Trommelbremsmodul (1) für Kraftfahrzeuge, umfassend einen elektromechanischen Aktuator (3), der auf einer Außenseite (12) der Ankerplatte (2) befestigt ist, zum Antrieb von einem Rot-Trans-Wandler mit einer Antriebsmutter (14) zur Wandlung einer rotatorischen Antriebsdrehbewegung in eine translatorische Betätigungsbewegung (B) von Bremsbacken (6a,b), die auf einer dem Aktuator (3) abgewandten Innenseite (13) der Ankerplatte (2) in einer Bremstrommel angeordnet sind, so dass diese eine Betätigungsbewegung in Richtung Bremstrommel ausführen können, **dadurch gekennzeichnet, dass** die Antriebsmutter (14) von dem Rot-Trans-Wandler, zur Bremskraftabstützung, axial fest sowie drehbar außen an der Ankerplatte (2) abgestützt ist.

2. Elektromotorisch betreibbares Trommelbremsmodul (1) für Kraftfahrzeuge nach Anspruch 1, **dadurch gekennzeichnet, dass**, die Antriebsmutter (14) eine verdrehgesichert sowie axial verschiebbar im Getriebegehäuse (8) gelagerte Spindelanordnung (9) antreibt, die mit einem Betätigungszug (5) an wenigstens einer Bremsbacke (6a,b) angreift.

3. Elektromotorisch betreibbares Trommelbremsmodul (1) für Kraftfahrzeuge nach Anspruch 1, **dadurch gekennzeichnet, dass** in einem Kraftfluss zwischen Ankerplatte (2) und Antriebsmutter (14) wenigstens ein Lager (15) angeordnet ist.

4. Elektromotorisch betreibbares Trommelbremsmodul (1) für Kraftfahrzeuge nach Anspruch 3, **dadurch gekennzeichnet, dass** das Lager (15) als Rillenkugellager oder Axiallager ausgebildet ist.

5. Elektromotorisch betreibbares Trommelbremsmodul (1) für Kraftfahrzeuge, nach einem oder mehreren der vorhergehenden Ansprüche, **dadurch gekennzeichnet, dass** ein Getriebegehäuse (8) einen Stutzen (23) zur Aufnahme der Spindelanordnung (9) aufweist.

6. Elektromotorisch betreibbares Trommelbremsmodul (1) für Kraftfahrzeuge nach Anspruch 5, **dadurch gekennzeichnet, dass** der Stutzen (23), in Relation zu einer Durchgangsöffnung (24) der Ankerplatte (2), zentriert angeordnet ist, insbesondere die Durchgangsöffnung (24) zumindest teilweise durchgreift.

7. Elektromotorisch betreibbares Trommelbremsmodul (1) für Kraftfahrzeuge, nach einem oder mehreren der vorhergehenden Ansprüche, **dadurch gekennzeichnet, dass** wenigstens eine Abdichtung im Bereich von dem Betätigungszug (5) vorgesehen ist, um Eintritt von Fremdmedien in den Aktuator (3) zu vermeiden.

8. Elektromotorisch betreibbares Trommelbremsmodul (1) für Kraftfahrzeuge nach Anspruch 7, **dadurch gekennzeichnet, dass** die Abdichtung wenigstens einen ortsfest angeordneten Grundkörper (27), mit wenigstens einer, im Wesentlichen ortsfest vorgesehen, Dichtlippe aufweist, die einen Spalt zwischen Getriebegehäuse (8) und Betätigungszug (5) verschließt.

9. Elektromotorisch betreibbares Trommelbremsmodul (1) für Kraftfahrzeuge nach Anspruch 7 und/oder 8, **dadurch gekennzeichnet, dass** zwischen Grundkörper (27) und Dichtlippe wenigstens ein elastischer Abschnitt, Roll- oder Faltenbalg (28) vorgesehen ist, welcher einen Betätigungshub vom Betätigungszug (5) elastisch kompensiert.

10. Elektromotorisch betreibbares Trommelbremsmodul (1) für Kraftfahrzeuge nach einem oder mehreren der vorhergehenden Ansprüche, **dadurch gekennzeichnet, dass** ein Hebel (40) definiert elastisch ausgebildet ist.

11. Elektromotorisch betreibbares Trommelbremsmodul (1) für Kraftfahrzeuge nach Anspruch 10, **dadurch gekennzeichnet, dass** dem Hebel (40) ein oder mehrere Anschläge (42) zur Änderung seiner elastischen Deformation zugeordnet ist/sind.

12. Elektromotorisch betreibbares Trommelbremsmodul (1) für Kraftfahrzeuge nach Anspruch 11 **dadurch gekennzeichnet, dass** der Anschlag (42) als gesonderter Schenkel von dem Hebel (40) ausgebildet ist.

13. Elektromotorisch betreibbares Trommelbremsmodul (1) für Kraftfahrzeuge nach einem der Ansprüche 10-12, **dadurch gekennzeichnet, dass** dem Hebel (40) ein Vorspannelement (41) zugeordnet ist.

14. Elektromotorisch betreibbares Trommelbremsmodul (1) für Kraftfahrzeuge nach einem der Ansprüche 10-13, **dadurch gekennzeichnet, dass** der Hebel (40) elastisch vorgespannt vorgesehen ist.

15. Elektromotorisch betreibbares Trommelbremsmodul (1) für Kraftfahrzeuge nach einem oder mehreren der vorhergehenden Ansprüche, **dadurch gekennzeichnet, dass** zwischen Aktuator (3) und Ankerplatte (2) ein Adapter (10) vorgesehen ist.

16. Elektromotorisch betreibbares Trommelbremsmodul (1) für Kraftfahrzeuge nach einem oder mehreren der vorhergehenden Ansprüche, **dadurch gekennzeichnet, dass** dem Aktuator (3) eine Parkbremsverriegelung und/oder ein stromlos selbsthemmender Rot-Trans-Wandler zugeordnet ist.

17. Elektromotorisch betreibbares Trommelbremsmodul (1) für Kraftfahrzeuge nach einem oder mehreren der vorhergehenden Ansprüche, **dadurch gekennzeichnet, dass** zwischen Antriebsmutter (14) und Spindelanordnung (9) Wälzkörper vorgesehen sind.

18. Elektromotorisch betreibbares Trommelbremsmodul (1) für Kraftfahrzeuge nach einem oder mehreren der vorhergehenden Ansprüche, **dadurch gekennzeichnet, dass** das Getriebegehäuse (8) oder der Motor (7) wenigstens eine elektrische Schnittstelle (60) aufweist, die als Stecker oder Buchse ausgebildet ist, welche zur elektrischen Verbindung mit einer elektronischen Steuereinheit (63)/ und/oder elektrischem Schalter dient.

19. Elektromotorisch betreibbares Trommelbremsmodul (1) für Kraftfahrzeuge nach einem oder mehreren der vorhergehenden Ansprüche, **dadurch gekennzeichnet, dass** der Aktuator (3) zur Rückstellung permanent elastisch durch wenigstens ein elastisch vorgespanntes Federelement (61,40), oder eine Serienschaltung mehrerer Federelemente, in Löserichtung elastisch vorgespannt ist.

## Claims

1. Drum brake module (1) for motor vehicles, which drum brake module can be operated by an electric motor, and comprises an electromechanical actuator (3) that is fastened to an outer face (12) of the anchor plate (2) for the purpose of operating a rotation to translation converter having a drive nut (14) for converting a rotary drive rotational movement into a translation actuating movement (B) of the brake shoes (6a,b) that are arranged in a brake drum on an inner face (13) of the anchor plate (2), which inner face is remote from the actuator (3), so that said brake shoes can perform an actuating movement in the direction towards the brake drum, **characterized in that** the drive nut (14) of the rotation to translation converter is supported in an axially fixed and rotatable manner externally on the anchor plate (2) in order to support the brake force.

2. Drum brake module (1) for motor vehicles, which drum brake module can be operated by an electric motor, according to Claim 1, **characterized in that** the drive nut (14) drives a spindle arrangement (9) that is mounted in a rotatably fixed manner and also in an axial displaceable manner in the gear housing (8), which spindle arrangement engages with an actuating pull (5) on at least one brake shoe (6a,b).

3. Drum brake module (1) for motor vehicles, which drum brake module can be operated by an electric motor, according to Claim 1, **characterized in that** at least one bearing (15) is arranged in a force flow between the anchor plate (2) and the drive nut (14).

4. Drum brake module (1) for motor vehicles, which drum brake module can be operated by an electric motor, according to Claim 3, **characterized in that** the bearing (15) is embodied as a grooved ball bearing or an axial bearing.

5. Drum brake module (1) for motor vehicles, which drum brake module can be operated by an electric motor, according to any one or several of the preceding claims, **characterized in that** a gear housing (8) comprises a connecting piece (23) for receiving the spindle arrangement (9).

6. Drum brake module (1) for motor vehicles, which drum brake module can be operated by an electric motor, according to Claim 5, **characterized in that** the connecting piece (23) is arranged in a central manner in relation to a through-going orifice (24) of the anchor plate (2), in particular said connecting piece at least partially engages through the through-going orifice (24).

7. Drum brake module (1) for motor vehicles, which drum brake module can be operated by an electric motor, according to any one or several of the preceding claims, **characterized in that** at least one sealing arrangement is provided in the region of the actuating pull (5) in order to prevent the ingress of foreign media into the actuator (3).

8. Drum brake module (1) for motor vehicles, which drum brake module can be operated by an electric motor, according to Claim 7, **characterized in that** the sealing arrangement comprises at least one base body (27) that is arranged fixed in place and comprises at least one sealing lip that is provided essentially fixed in place, which sealing lip seals a gap between the gear housing (8) and an actuating pull (5).

9. Drum brake module (1) for motor vehicles, which drum brake module can be operated by an electric motor, according to Claim 7 and/or 8, **characterized in that** an elastic portion, roll bellows or concertina bellows (28) is provided between the base body (27) and the sealing lip, which elastic portion, roll bellows or concertina bellows compensates in an elastic manner for an actuating stroke of the actuating pull (5).

10. Drum brake module (1) for motor vehicles, which drum brake module can be operated by an electric motor, according to any one or several of the preceding claims, **characterized in that** a lever (40) is embodied in a defined elastic manner.

11. Drum brake module (1) for motor vehicles, which drum brake module can be operated by an electric motor, according to Claim 10, **characterized in that** one or more stops (42) are allocated to the lever (40) in order to change its elastic deformation.

12. Drum brake module (1) for motor vehicles, which drum brake module can be operated by an electric motor, according to Claim 11, **characterized in that** the stop (42) is embodied as a separate limb on the lever (40).

13. Drum brake module (1) for motor vehicles, which drum brake module can be operated by an electric motor, according to any one of Claims 10-12, **characterized in that** a pre-stressing element (41) is allocated to the lever (40).

14. Drum brake module (1) for motor vehicles, which drum brake module can be operated by an electric motor, according to any one of Claims 10-13, **characterized in that** the lever (40) is provided in an elastically pre-stressed state.

15. Drum brake module (1) for motor vehicles, which drum brake module can be operated by an electric motor, according to any one or several of the preceding claims, **characterized in that** an adaptor (10) is provided between the actuator (3) and anchor plate (2).

16. Drum brake module (1) for motor vehicles, which drum brake module can be operated by an electric motor, according to any one or several of the preceding claims, **characterized in that** a parking brake locking arrangement and/or a currentless self-locking arrangement of the rotation to translation converter is allocated to the actuator (3).

17. Drum brake module (1) for motor vehicles, which drum brake module can be operated by an electric motor, according to any one or several of the preceding claims, **characterized in that** roller bodies are provided between the drive nut (14) and the spindle arrangement (9).

18. Drum brake module (1) for motor vehicles, which drum brake module can be operated by an electric motor, according to any one or several of the preceding claims, **characterized in that** the gear housing (8) or the motor (7) comprise at least one electrical interface (60) that is embodied as a male connector or a female connector, said interface being used to provide an electrical connection to an electronic control unit (63) and/or an electric switch.

19. Drum brake module (1) for motor vehicles, which drum brake module can be operated by an electric motor, according to any one or several of the preceding claims, **characterized in that** in order to restore the actuator (3) to its original position, said actuator is pre-stressed in an elastic manner in the release direction in a permanently elastic manner by means of at least one elastically pre-stressed spring element (61,40) or is pre-stressed by means of a plurality of spring elements that are connected in series.

## Revendications

1. Module de frein à tambour (1) pouvant fonctionner à l'aide d'un moteur électrique pour véhicules à moteur, comprenant un actionneur électromécanique (3), qui est fixé sur un côté extérieur (12) de la plaque d'ancrage (2), pour l'entraînement d'un convertisseur rotation-translation avec un écrou d'entraînement (14) pour la conversion d'un mouvement d'entraînement par rotation en un mouvement d'actionnement par translation (B) de mâchoires de frein (6a, b), qui sont disposées sur un côté intérieur (13) de la plaque d'ancrage (2) détourné de l'actionneur (3) dans un tambour de frein, de telle manière que celles-ci puissent exécuter un mouvement d'actionnement en direction du tambour de frein, **caractérisé en ce que** l'écrou d'entraînement (14) du convertisseur rotation-translation est appuyé, pour l'appui de la force de freinage, de façon axialement fixe mais rotative extérieurement sur la plaque d'ancrage (2).

2. Module de frein à tambour (1) pouvant fonctionner à l'aide d'un moteur électrique pour véhicules à moteur selon la revendication 1, **caractérisé en ce que** l'écrou d'entraînement (14) entraîne un ensemble d'arbre (9) supporté de façon calée en rotation mais axialement mobile dans le boîtier de transmission (8), lequel agit avec un tirant d'actionnement (5) sur au moins une mâchoire de frein (6a, b).

3. Module de frein à tambour (1) pouvant fonctionner à l'aide d'un moteur électrique pour véhicules à moteur selon la revendication 1, **caractérisé en ce qu'**au moins un palier (15) est disposé dans un flux de force entre la plaque d'ancrage (2) et l'écrou d'entraînement (14).

4. Module de frein à tambour (1) pouvant fonctionner à l'aide d'un moteur électrique selon la revendication 3, **caractérisé en ce que** le palier (15) est un roulement à billes rainuré ou un palier lisse de butée.

5. Module de frein à tambour (1) pouvant fonctionner à l'aide d'un moteur électrique selon une ou plusieurs des revendications précédentes, **caractérisé en ce qu'**un boîtier de transmission (8) présente un fourreau (23) destiné à recevoir l'ensemble d'arbre (9).

6. Module de frein à tambour (1) pouvant fonctionner à l'aide d'un moteur électrique selon la revendication 5, **caractérisé en ce que** le fourreau (23) est disposé de façon centrée par rapport à une ouverture de passage (24) de la plaque d'ancrage (2), en particulier franchit au moins en partie l'ouverture de passage (24).

7. Module de frein à tambour (1) pouvant fonctionner à l'aide d'un moteur électrique selon une ou plusieurs des revendications précédentes, **caractérisé en ce qu'**il est prévu au moins une étanchéité dans la région du tirant d'actionnement (5), afin d'empêcher l'entrée de substances étrangères dans l'actionneur (3).

8. Module de frein à tambour (1) pouvant fonctionner à l'aide d'un moteur électrique selon la revendication 7, **caractérisé en ce que** l'étanchéité présente au moins un corps de base disposé fixement (27), avec au moins une lèvre d'étanchéité, prévue essentiellement fixe, qui ferme une fente entre le boîtier de transmission (8) et le tirant d'actionnement (5).

9. Module de frein à tambour (1) pouvant fonctionner à l'aide d'un moteur électrique selon la revendication 7 et/ou 8, **caractérisé en ce qu'**il est prévu entre le corps de base (27) et la lèvre d'étanchéité au moins une partie élastique, soufflet roulant ou en accordéon (28), qui compense élastiquement une course d'actionnement du tirant d'actionnement (5).

10. Module de frein à tambour (1) pouvant fonctionner à l'aide d'un moteur électrique selon une ou plusieurs des revendications précédentes, **caractérisé en ce qu'**un levier (40) est réalisé de façon élastiquement définie.

11. Module de frein à tambour (1) pouvant fonctionner à l'aide d'un moteur électrique selon la revendication 10, **caractérisé en ce qu'**une ou plusieurs butée(s) (42) destinée(s) à modifier sa déformation élastique est/sont associée(s) au levier (40).

12. Module de frein à tambour (1) pouvant fonctionner à l'aide d'un moteur électrique selon la revendication 11, **caractérisé en ce que** la butée (42) est réalisée comme une branche séparée du levier (40).

13. Module de frein à tambour (1) pouvant fonctionner à l'aide d'un moteur électrique selon une des revendications 10 à 12, **caractérisé en ce qu'**un élément de précontrainte (41) est associé au levier (40).

14. Module de frein à tambour (1) pouvant fonctionner à l'aide d'un moteur électrique selon une des revendications 10 à 13, **caractérisé en ce que** le levier (40) est prévu avec une précontrainte élastique.

15. Module de frein à tambour (1) pouvant fonctionner à l'aide d'un moteur électrique selon une ou plusieurs des revendications précédentes, **caractérisé en ce qu'**en ce qu'il est prévu un adaptateur (10) entre l'actionneur (3) et la plaque d'ancrage (2).

16. Module de frein à tambour (1) pouvant fonctionner à l'aide d'un moteur électrique selon une ou plusieurs des revendications précédentes, **caractérisé en ce qu'**un verrouillage de frein de stationnement et/ou un convertisseur rotation-translation autobloquant sans courant est associé à l'actionneur (3).

17. Module de frein à tambour (1) pouvant fonctionner à l'aide d'un moteur électrique selon une ou plusieurs des revendications précédentes, **caractérisé en ce qu'**il est prévu des corps de roulement entre l'écrou d'entraînement (14) et l'ensemble d'arbre (9).

18. Module de frein à tambour (1) pouvant fonctionner à l'aide d'un moteur électrique selon une ou plusieurs des revendications précédentes, **caractérisé en ce que** le boîtier de transmission (8) ou le moteur (7) présente au moins une interface électrique (60), qui est réalisée sous forme de fiche ou de douille, qui est utilisée pour la liaison électrique avec une unité de commande électronique (63) et/ou avec un interrupteur électrique.

19. Module de frein à tambour (1) pouvant fonctionner à l'aide d'un moteur électrique selon une ou plusieurs des revendications précédentes, **caractérisé en ce que** l'actionneur (3) est élastiquement précontraint en direction de libération pour le rappel élastique permanent par au moins un élément de ressort élastiquement précontraint (61, 40) ou par un montage en série de plusieurs éléments de ressort.
